# EUROPÄISCHE PATENTSCHRIFT

(11) **EP 1 785 461 B1**
(45) Veröffentlichungstag und Bekanntmachung des Hinweises auf die Patenterteilung: **05.10.2011**
(21) Anmeldenummer: 06123349.0
(22) Anmeldetag: 02.11.2006
(51) Int. Cl.: C09J 7/02, B32B 27/08

(54) **Weiterreißfestes Klebeband**
Tear resistant adhesive tape
Ruban adhésif résistant à la rupture

(30) Priorität: 11.11.2005 DE 102005054254
(43) Veröffentlichungstag der Anmeldung: 16.05.2007
(73) Patentinhaber: TESA SE, 20253 Hamburg (DE)
(72) Erfinder: Rodewald, Ilse, Charlotte, NC 28210 (US); Grittner, Dr. Norbert, 22459, Hamburg (DE); Yun, Petra, 20251, Hamburg (DE); Röhl, Michael, 25469, Halstenbek (DE); Schwertfeger, Michael, 22147, Hamburg (DE); Krupke, Siegfried, 25436, Tornesch (DE)

(56) Entgegenhaltungen:
- EP-A- 1 775 331
- EP-A2- 0 343 896
- US-A- 2 750 315
- US-A- 3 985 599
- US-B1- 6 187 131
- 'Schlitz' DWDS DAS DIGITALE WÖRTERBUCH DER DEUTSCHEN SPRACHE DES 20. JH., [Online] Gefunden im Internet: <URL:http://www.dwds.de/?kompakt=1&sh=1&qu= schlitz> [gefunden am 2009-08-19]

## Beschreibung

Die Erfindung betrifft ein Klebeband, dessen Träger aus einem Laminat aus mindestens zwei Folien besteht.

Die Weiterreißfestigkeit von Klebebändern stellt ein Problem dar, an dessen Lösung stets gearbeitet wird.

Bekannt ist des Weiteren, dass Folien, die zum Erreichen einer hohen Längszugfestigkeit monoaxial verstreckt werden, üblicherweise den Nachteil einer drastisch verringerten Weiterreißfestigkeit haben.
Lösungen für die Erhöhung der Weiterreißfestigkeit von Klebebändern beruhen auf verschiedenen Ansätzen, zum Beispiel auf der Faserverstärkung des Trägermaterials. Üblich sind so genannte "Filament"-Klebebänder mit unidirektionalen Längs-Gelegen oder bidirektionalen Geweben oder Gelegen, die aus gezwirnten oder getengelten Garnen bestehen. Diese Garne können zum Beispiel aus künstlichen Endlosfasern, aber auch aus Naturfasern bestehen. Die Fasern dieser Art von Klebebändern sind oftmals zu örtlich fixierten Faser- oder Filamentbündeln zusammengehalten.
Die so eingebrachten Fasern können zusätzlich zur Aufgabe der Erhöhung der Weitereißfestigkeit einen variablen Anteil der Zugfestigkeit übernehmen.

Eine andere Lösung stellt zum Beispiel eine gereckte Folie aus mindestens zwei coextrudierten Schichten unterschiedlicher Zusammensetzung mit einer unregelmäßigen inneren Struktur dar, wie sie in DE 199 55 610 A1 dargelegt ist. Die Dicke einer dieser Schichten variiert hier umgekehrt proportional zu der zweiten Schicht über die Breite des Klebebandes, die Gesamtdicke ist konstant. Ein in Querrichtung beginnender Riss wird durch die unterschiedlichen mechanischen Eigenschaften der Schichten in Längsrichtung der hier offenbarten Ausführungsform ist jedoch die aufwändige maschinentechnische Ausstattung, die zur Herstellung dieses Folientyps erforderlich ist.
Eine weitere Möglichkeit die Weiterreißfestigkeit zu erhöhen, ist zum Beispiel eine verstärkende Rippenstruktur, wie sie in EP 0 343 896 A1, US 5,145,544 A und US 5,173,141 A offenbart ist. Auch diese Variante weist verschiedene Nachteile auf, die bereits hinlänglich in der DE 199 55 610 A1 dargelegt sind.

Aufgabe der Erfindung ist es, ein Klebeband zur Verfügung zu stellen, das eine in Querrichtung (cross direction, cd) sehr hohe Weiterreißfestigkeit und eine in Längsrichtung (machine direction, md) sehr hohe Zugfestigkeit aufweist.

Gelöst wird diese Aufgabe durch ein Klebeband, wie es in Anspruch 1 dargelegt ist. Gegenstand der Unteransprüche sind dabei Weiterbildungen des erfindungsgemäßen Klebebands sowie Verwendungen desselben.

Demgemäß betrifft die Erfindung ein Klebeband mit einem Trägermaterial, auf das zumindest einseitig eine Klebemasse, insbesondere Haftklebemasse aufgebracht ist, wobei das Trägermaterial aus einem Laminat aus mindestens einer Stützfolie und einer Schlitzfolie besteht, wobei die Schlitzfolie mindestens einen sich in der Längsrichtung des Klebebands erstreckenden Schlitz aufweist, wobei die daraus resultierenden Streifen in der Schlitzfolie eine Breite von 1 bis 4 mm aufweisen und die daraus resultierenden Streifen unmittelbar aneinander anliegen, und das Laminat aus der Stütz- und der Schlitzfolie durch einen Klebstoff zusammengehalten wird.

In einer ersten vorteilhaften Ausführungsform ist die Schlitzfolie zwischen Stützfolie und Klebemasse vorhanden.

Das Trägermaterial kann weitere Folien aufweisen, wobei diese auch als weitere Schlitzfolien ausgeführt sein können.

Das Laminat des Trägermaterials ist in seinem Aufbau (Zahl der Folien, Dicke und Material der eingesetzten Folien) kaum eingeschränkt, sondern kann an die vorgegebenen Anforderungen, die an das Klebeband gestellt werden, optimal angepasst werden.

In einer bevorzugten Ausführungsform des Trägermaterials werden in die Schlitzfolie zwei Randstreifen geschlitzt. Die Breite der Randstreifen beträgt maximal ein Drittel der gesamten Klebebandbreite. Die Randstreifen bieten Schutz vor im Vorfeld kalkulierbarer Seitenkantenverletzung mit einer maximalen Eindringtiefe. Die Randstreifen können im Laminat verbleiben oder vor der Wicklung zu Rollen als Abfall abgeführt werden.

Die Stützfolie ist ungeschlitzt und übernimmt die Funktion, die geschlitzte Folie zu stabilisieren, also ein Auseinanderfallen der einzelnen Teile der Schlitzfolie zu verhindern.
Als Material für die Stützfolie können alle dem Fachmann bekannten Folienmaterialien verwendet werden, wobei die Auswahl lediglich durch den Herstellungsprozess des Laminats beschränkt ist.
Bevorzugt sind beispielsweise BOPP, MOPP, PP, PE, PET, PA, PU, PVC oder Polyester. Allgemein können Polyolefine, Copolymere aus Ethylen und polaren Monomeren wie Styrol, Vinylacetat, Methylmethacrylat, Butylacrylat oder Acrylsäure, Homopolymere wie HDPE, LDPE, MDPE oder Copolymere aus Ethylen und einem weiteren Olefin wie Propen, Buten, Hexen oder Octen (zum Beispiel LLDPE, VLLDPE) oder Polypropylene wie zum Beispiel Polypropylen-Homopolymere, Polypropylen-Random-Copolymere oder Polypropylen-Block-Copolymere eingesetzt werden.
Die Foliendicken können vorteilhaft von 5 bis 50 µm reichen. Auch stärkere Dicken können zum Einsatz kommen, dabei ist jedoch zu beachten, dass der Stützträger im Wesentlichen für die technisch erforderliche Anordnung insbesondere der Schlitzfolie im späteren Klebeband sorgt.
Deshalb kann die Stützträgerfolie im Falle des Einreißens des Klebebands sogar vollständig über die gesamte Breite reißen, ohne dass damit die Stabilität des Klebebands erheblich leidet.

Neben der Aufgabe, die geschlitzte Folie zu stabilisieren, kann der Stützträger durch eine entsprechende Materialauswahl weitere Aufgaben übernehmen.
Er kann als Schutz gegen Chemikalien oder als Barrierefolie dienen, indem zum Beispiel eine metallische Schicht aufgebracht wird.
Er kann durch Einarbeitung von UV-Absorbern den UV-Schutz der Klebmasse gewährleisten.

Er kann die optischen Eigenschaften wie Glanz oder Farbe bestimmen, indem beispielsweise eine gefärbte Folie eingesetzt wird.
Die Oberflächeneigenschaften wie Friktion oder Releasewirkung können entscheidend beeinflusst werden.
Neben den hier genannten Optionen sind weitere, nicht explizit aufgeführte Weiterbildungen der Stützfolie möglich, wobei die tatsächliche Auswahl innerhalb des üblichen technischen Wissens des Fachmanns liegt.

Der geschlitzte Träger übernimmt die tragende Funktion. Auch hier sind alle Materialien denkbar, bevorzugt werden jedoch steifere und zugfeste Träger wie PET, MOPP, H-PVC. Der Schlitzträger weist zumindest einen sich in der Längsrichtung des Klebebands erstreckenden Schlitz auf, so dass mindestens eine weitere unverletzte Folienkante zusätzlich zu den beiden Seitenkanten erzeugt wird.
Die geschlitzte Folie wird nach mechanischen Eigenschaften wie Zugfestigkeit, Steifigkeit und weiteren ausgewählt.

Wie die Stützfolie kann auch die Schlitzfolie die oben aufgezählten zusätzlichen Funktionen übernehmen, zumindest teilweise.

Die Streifen können unterschiedliche Breiten aufweisen. Insbesondere bevorzugt ist es aber, wenn alle Streifen die gleiche Breite aufweisen. Dabei kann sich herstellungsbedingt eine abweichende Breite der beiden außenliegenden Streifen ergeben.
Um durch die Streifen zusätzliche innere Kanten zu schaffen, sind zumindest zwei Schlitze vorgesehen. Die Schnittkante kann dann mittig angeordnet sein, so dass die beiden Streifen gleich breit sind. Es können aber auch "unsymmetrische" Schlitzfolien hergestellt werden, bei denen der eine Streifen breiter ist als der zweite Streifen und insbesondere die Weitereinreißbarkeit von der Seite des schmaleren Streifens her reduziert wird.

Die Zahl der Streifen lässt sich im Prinzip beliebig erhöhen, wobei durch die Breite des Klebebandes und die Streifenbreite die Obergrenze der Streifenzahl bedingt wird. So lassen sich beispielsweise auch symmetrische oder unsymmetrische Schlitzfolien mit drei Streifen herstellen, beispielsweise solche, bei denen in der Nähe der Klebebandkanten jeweils eine innere Kante als Rissgrenze vorgesehen ist.

Die Breite der Streifen liegt besonders bevorzugt zwischen 1 und 4 mm, sehr bevorzugt bei etwa 2 mm. Insbesondere bei Streifen, die eine geringe Breite im Verhältnis zur Breite des Klebebandes aufweisen, ist eine gleiche Streifenbreite von Vorteil.

Bevorzugt werden Ausführungsformen, bei denen ein Schlitz über die Breite des Klebebands vorhanden ist. Weiterhin haben sich zwei Schlitze als vorteilhaft erwiesen, die vorzugsweise symmetrisch angeordnet sind. So ist ein Klebeband bei einer Breite von 15 mm, in dem eine Schlitzfolie mit insgesamt drei Streifen vorhanden ist, die von links nach rechts eine Breite von 4 / 7 / 4 mm haben, besonders vorteilhaft.

Die Materialien von Stütz- und Schlitzfolie können unabhängig voneinander gewählt werden.

Das Laminat aus mindestens der Stütz- und der Schlitzfolie wird dadurch gebildet, dass die einzelnen Schichten durch einen Klebstoff miteinander verbunden werden. Hierfür können alle üblichen Klebstoffe verwendet werden wie zum Beispiel Hotmelt-Klebstoffe, druckempfindliche Klebstoffe oder Klebstoffe auf Basis PU. Die Schichtdicke des Klebestoffs liegt zwischen 7 bis 50 µm. Die verwendete Kaschierklebemasse kann eingefärbt werden. Alternativ kann auch eine Heißsiegelfolie eingesetzt werden, um die mindestens zwei Folien miteinander zu verbinden.

Das Laminat führt zu einem Trägermaterial mit hoher Festigkeit, das wiederum Klebebänder ermöglicht, die in ihrer Dicke deutlich unter Klebebändern des Standes der Technik für entsprechende Einsatzgebiete liegen. So lassen sich Klebebänder mit einer Dicke von insbesondere 80 bis 150 µm erzeugen, besonders bevorzugt von unter 120 µm, ganz besonders bevorzugt von unter 100 µm erzeugen, und das überraschend bei vergleichbarer Rissfestigkeit.
Die Festigkeit des Trägermaterials beträgt vorzugsweise mindestens 250 N/mm², insbesondere 300 N/mm².
Das Klebeband weist eine erhebliche Zugfestigkeit sowie Weiterreißfestigkeit in Querrichtung auf. Darüber hinaus ist es nur geringfügig dehnbar, und das alles bei einer sehr geringen Dicke.

Die Klebemasse der erfindungsgemäßen Klebebänder kann eine (Selbst-)Klebemasse sein, die aus der Gruppe der Naturkautschuke oder der Synthesekautschuke oder aus einem beliebigen Blend aus Naturkautschuken und/oder Synthesekautschuken besteht, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.
Stellvertretend genannt seien an dieser Stelle vor allem die besonders verträglichen Styrol-Isopren-Styrol (SIS)- und Styrol-Butadien-Styrol (SBS)-Typen.

Daneben hat sich ein 100%-System auf Styrol-Isopren-Styrol (SIS) als geeignet erwiesen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Eine Vernetzung ist vorteilhaft für die Verbesserung der Wiederabziehbarkeit des Klebebandes nach der Anwendung und kann thermisch oder durch Bestrahlung mit UV-Licht oder Elektronenstrahlen erfolgen.

Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.
Die Vernetzer werden vorzugsweise aktiviert bei Temperaturen über 50°C, insbesondere bei Temperaturen von 100°C bis 160 °C, ganz besonders bevorzugt bei Temperaturen von 110°C bis 140 °C.
Die thermische Anregung der Vernetzer kann auch durch IR-Strahlen oder hochenergetische Wechselfelder erfolgen.

Geeignet ist eine Klebemasse auf Acrylathotmelt-Basis, auf Lösemittelbasis oder auf wässriger Basis, wobei erstere einen K-Wert von mindestens 20 aufweisen kann, insbesondere größer 30, erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungsextruder bevorzugt.
Eine derartige Klebemasse ist in der DE 43 13 008 A1 dargelegt, auf deren Inhalt hiermit Bezug genommen wird und deren Inhalt Teil dieser Offenbarung und Erfindung wird.
Die Klebemasse auf Acrylathotmelt-Basis kann aber auch chemisch vernetzt sein.

In einer weiteren Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Eine Klebemasse, die sich als besonders geeignet zeigt, ist eine niedermolekulare Acrylatschmelzhaftklebemasse, wie sie unter der Bezeichnung acResin UV oder Acronal ®, insbesondere Acronal ® DS3458, von der BASF geführt wird. Diese Klebemasse mit niedrigem K-Wert erhält ihre anwendungsgerechten Eigenschaften durch eine abschließende strahlenchemisch ausgelöste Vernetzung.

Abschließend sei erwähnt, dass auch auf Polyurethan basierende Kleber geeignet sind.

Besonders vorteilhaft lässt sich ein einseitig klebend ausgerüstetes Klebeband verwenden, wobei der Auftrag an Klebemasse vorzugsweise zwischen 15 bis 60 g/m², weiter vorzugsweise zwischen 20 bis 30 g/m² liegt.

Schließlich kann das Klebeband ein Abdeckmaterial aufweisen, mit dem bis zum Gebrauch die eine oder die zwei Klebemasseschichten eingedeckt sind. Als Abdeckmaterialien eignen sich auch alle oben ausführlich aufgeführten Materialien.
Bevorzugt wird aber ein nicht-fusselndes Material eingesetzt wie eine Kunststofffolie oder ein gut verleimtes, langfaseriges Papier.
Die gegebenenfalls nicht mit Klebemasse ausgerüstet Seite des Klebebands kann sodann übliche Primer aufweisen.

Das Schlitzen der Schlitzfolie kann an verschiedenen Punkten des Herstellungsprozesses erfolgen, beispielsweise vor der Herstellung des Laminats. Zu diesem Zweck wird die zu schlitzende Folie zum Beispiel an einem Klingensatz vorbeigeführt, in Streifen geschlitzt und danach direkt zur Stützfolie dazukaschiert. Das Schlitzen muss nicht notwendigerweise mit Klingenschnitt erfolgen, sondern es kann ebenso mit anderen handelsüblichen Schneidverfahren geschlitzt werden.

Welcher der beiden Träger den Kaschierkleber vor der Kaschierung trägt, ist nicht ausschlaggebend. Der geschlitzte Träger kann auch schon mit dem späteren Haftkleber beschichtet sein.

Eine zweite Variante des Schlitzprozesses findet nach der Laminatherstellung und im Prozessschritt der Konfektionierung (Schneiden des Klebebands auf die gewünschte Breite) statt. Für diesen Fall wird ein Laminat aus Stütz- und Schlitzträger hergestellt und mit der bevorzugten Haftklebemasse beschichtet. Dieses Laminat wird daraufhin rotativ gestanzt. Dabei wird das Laminat in der gewünschten Klebebandbreite voll durchgestanzt und dazwischen mindestens einmal angestanzt, so dass der unter der Rotationsstanze obenliegende Schlitzträger durchgestanzt wird, der verwendete Kaschierkleber als Pufferzone genutzt und der zu unterst liegende Stützträger nicht beschädigt wird.

Die klassischen Anwendungen von weiterreißfesten Klebebändern umfassen zum Beispiel Bündeln, Verpacken, Palettisieren oder Einsatz ähnlich eines Spanngurtes und sind in der US 2,750,315 A eingehend beschrieben. Deren Gemeinsamkeit ist die Fixierung eines oder mehrerer Gegenstände an sich selbst, aneinander oder an weiteren Objekten.
Sämtliche dort erwähnte Anwendungen können mit der vorliegenden Erfindung ähnlich effizient erfüllt werden.
Neben den oben genannten Anwendungen ist das erfindungsgemäße Klebeband hervorragend geeignet für alle Aufgaben, bei denen eine verstärkende Wirkung lasttragender Elemente in Kombination oder wahlweise einzeln mit Ein- und Weiterreißfestigkeit benötigt wird.
Verstärkt werden können zum Beispiel Materialien wie Papier, Well- oder Vollpappe vorzugsweise an exponierten Stellen wie Eingriffen, Henkeln und Auslässen. Außerdem kann das Klebeband als konstruktives Element verwendet werden, um zum Beispiel das Ausbeulen schwererer Verpackungen zu verhindern.

Hieraus ergeben sich Vorteile wie
- das Aufwerten von Verpackungen für höhere Beanspruchungen,
- die Reduktion des Gesamtmaterialeinsatzes durch gezielte Verstärkung der Hauptbelastungszonen und
- die Erhöhung der Verwendungsdauer einer Verpackung

Im Gegensatz zu den bekannten Lösungen erfordert die vorliegende Erfindung keine verstärkenden Filamente.

Die hier vorliegende Erfindung basiert auf der Beobachtung, dass Folien mit unverletzten Seitenkanten, also zum Beispiel sauber geschnittene Folienstreifen, auch unter Zugbelastung nicht einreißen, sondern den Zug aufnehmen und in plastische Verformung umsetzen. Der Streifen wird gedehnt. Gerade steife, dünne Folien wie MOPP oder PET reagieren jedoch sofort mit Durchreißen, sobald die Seitenkante verletzt wird. Dabei können schon ein unsauberer Schnitt oder einfach nur ein Kratzer eine solche Verletzung darstellen, die zu einem totalen Versagen des Klebebands unter Zugbelastung führt.

Werden jedoch in einem Klebeband über die Breite des Trägers mehrere dieser Kanten erzeugt, so kann eine verletzt werden, ohne dass das Klebeband vollständig quer durchreißt. Der Riss wird von der nächsten unverletzten Schnittkante aufgehalten.
In dem Trägermaterial sind vorzugsweise mehrere Schlitze parallel nebeneinander angeordnet. Bei Verletzung im Randbereich stoppt der Riss unmittelbar an der nächsten Kante, die sich durch den Schlitz ergibt, also in unmittelbarer Nähe des ursprünglichen Endes des Risses (die Verletzungstiefe entspricht der endgültigen Einreißtiefe).

In der vorliegenden Erfindung ersetzt im Falle der seitlichen Beschädigung eine der sich weiter im Inneren des Klebebandes befindliche Kante die beschädigte äußere Kante und versetzt so das Klebeband für den Rest der verbleibenden tragenden Breite in einen quasi unverletzten Zustand zurück.

Die Erfindung bezieht sich also auf die Idee, dass ein Laminat aus einer ungeschlitzten Folie und einer längsgeschlitzten Folie die Vorteile der erhöhten Quer-Reißfestigkeit bietet, diese aber mit den Vorteilen der Folienklebebänder wie flache und ebene Struktur und geringe Dichte bei hoher Zugfestigkeit verbindet.

Weitere Vorteile dieser Erfindung liegen unter anderem darin, dass Folien verwendet werden. Dies führt im Gegensatz zu zum Beispiel Filament verstärkten Klebebändern zu sehr flachen Aufbauten von 100 µm und weniger bei ähnlicher Leistung. Des Weiteren entstehen keinerlei Hohlräume wie bei Geweben und Gelegen, die durch Klebmasse aufgefüllt werden müssen. Dies führt zu einer prägnanten Klebmasseersparnis.

Anhand der nachfolgend beschriebenen Figuren wird die Erfindung näher erläutert, ohne damit diese unnötig einschränken zu wollen.

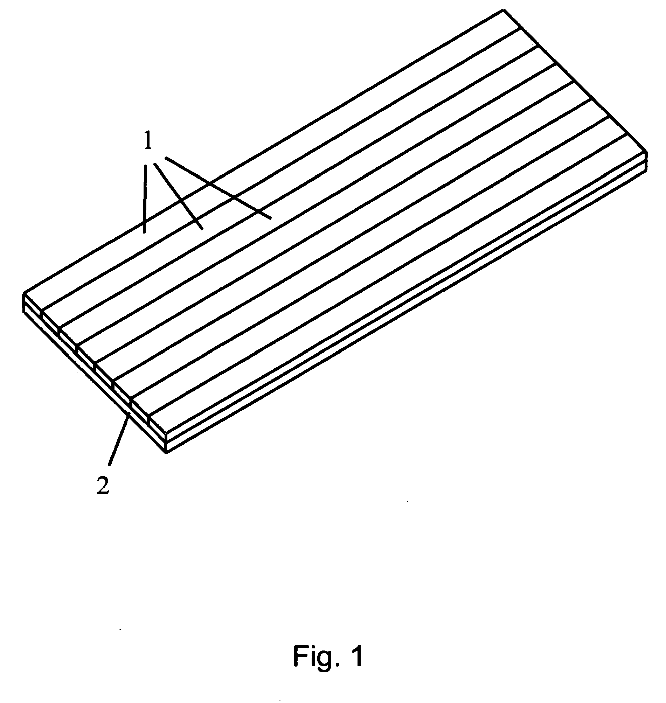

Es zeigen
- Figur 1: das Klebeband MIT Blick auf die Schlitzfolie,
- Figur 2: das Schlitzverfahren zur Herstellung des Klebebands und
- Figur 3: die erforderlichen Anlagenteile zur Durchführung des Schlitzverfahrens.

Das Klebeband weist ein Trägermaterial auf, das aus einem Laminat aus mindestens einer Stützfolie 2 und aus einer aus mehreren Streifen 1 gebildeten Schlitzfolie besteht. Die Streifen 1 kommen dadurch zustande, dass die Schlitzfolie durch mehrere sich in der Längsrichtung des Klebebands erstreckenden Schlitze geschlitzt wird.
Auf die Schlitzfolie wird die hier nicht dargestellte Klebemasse aufgetragen.

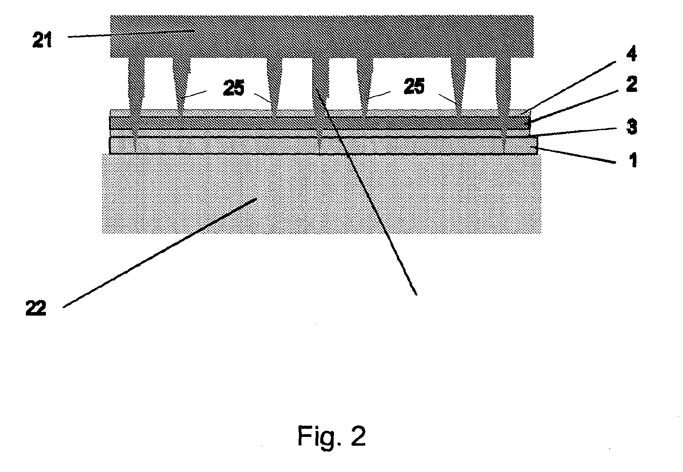

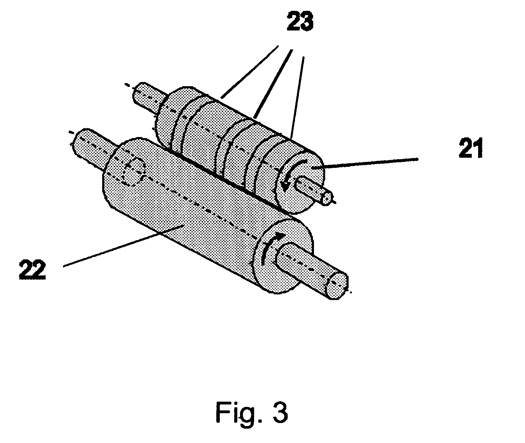

In der Figur 2 ist das Schlitzverfahren zur Herstellung des Klebebands gezeigt. Das Klebeband besteht aus den vier Schichten Stützfolie 1, Kaschierklebemasse 2, Schlitzfolie 3 und Klebemasse 4 und wird zwischen einen Rotationsstanzwelle 21 und einen Gegenstanzzylinder 22 geführt.
Durch umlaufende Schneidlinien 23 (siehe Figur 3) wird zum einen gewährleistet, dass die Schlitzfolie 2 geschlitzt wird, indem das Klebeband lediglich angestanzt wird (25), sprich die Schlitzfolie 2 geschlitzt und die Stützfolie 1 unberührt bleibt. Der Kaschierkleber 3 wird als Pufferzone genutzt, und der zu unterst liegende Stützträger 1 nicht beschädigt.
Gleichzeitig wird das Klebeband auf Breite geschnitten, indem alle Trägerfolien sowie die Klebemassen durchgestanzt werden.

Figur 3 zeigt nochmals das Zusammenspiel von Rotationsstanzwelle 21 und Gegenstanzzylinder 22.

## Patentansprüche

1. Klebeband mit einem Trägermaterial, auf das zumindest einseitig eine Klebemasse aufgebracht ist, wobei das Trägermaterial aus einem Laminat aus mindestens einer Stützfolie und einer Schlitzfolie besteht,
**dadurch gekennzeichnet, dass**
die Schlitzfolie mindestens einen sich in der Längsrichtung des Klebebands erstreckenden Schlitz aufweist, wobei die daraus resultierenden Streifen in der Schlitzfolie eine Breite von 1 bis 4 mm aufweisen und die daraus resultierenden Streifen unmittelbar aneinander anliegen,
und das Laminat aus der Stütz- und der Schlitzfolie durch einen Klebstoff zusammengehalten wird.

2. Klebeband nach Anspruch 1, **dadurch gekennzeichnet, dass**
die Schlitzfolie zwischen Stützfolie und Klebemasse vorhanden ist.

3. Klebeband nach Anspruch 1 oder 2, **dadurch gekennzeichnet, dass**
das Trägermaterial weitere Folien aufweist, wobei diese auch als Schlitzfolie ausgebildet sein können.

4. Klebeband nach zumindest einem der Ansprüche 1 bis 3, **dadurch gekennzeichnet, dass** die Stützfolie aus BOPP, MOPP, PP, PE, PET, PA, PU, PVC oder Polyester besteht und/oder eine Dicke von 5 bis 50 µm aufweist.

5. Klebeband nach zumindest einem der vorherigen Ansprüche, **dadurch gekennzeichnet, dass**
die Schlitzfolie aus steifen und zugfesten Träger wie Polyester, PET, . MOPP, H-PVC besteht.

6. Klebeband nach zumindest einem der vorherigen Ansprüche, **dadurch gekennzeichnet, dass**
der Stützträger eine Dicke aufweist von bis zu 50 µm, vorzugsweise 5 bis 25 µm, ganz besonders vorzugsweise 5 bis 15 µm.

7. Klebeband nach zumindest einem der vorherigen Ansprüche, **dadurch gekennzeichnet, dass**
der Auftrag an Klebemasse auf das Trägermaterial zwischen 15 bis 60 g/m², vorzugsweise zwischen 20 bis 30 g/m² beträgt.

8. Klebeband nach zumindest einem der vorherigen Ansprüche, **dadurch gekennzeichnet, dass**
die Festigkeit des Trägermaterials mindestens 250 N/mm², insbesondere 300 N/mm² beträgt.

9. Klebeband nach zumindest einem der vorherigen Ansprüche, **dadurch gekennzeichnet, dass**
die Klebemasse eine Haftklebemasse ist.

10. Verwendung eines Klebebands nach zumindest einem der vorherigen Ansprüche zum Bündeln, Verpacken, Palettisieren.

11. Verwendung eines Klebebands nach zumindest einem der vorherigen Ansprüche als Verstärkungsband auf Papier, Well- oder Vollpappe, vorzugsweise an exponierten Stellen wie Eingriffen, Henkeln und Auslässen.

## Claims

1. Adhesive tape having a backing material applied to at least one side of which is an adhesive, the backing material being composed of a laminate of at least one supporting film and one slitted film, **characterized in that** the slitted film has at least one slit extending in the machine direction of the adhesive tape, the resultant strips in the slitted film having a width of 1 to 4 mm and the resultant strips immediately adjoining one another, and the laminate of the supporting film and the slitted film being held together by an adhesive.

2. Adhesive tape according to Claim 1, **characterized in that** the slitted film is located between supporting film and adhesive.

3. Adhesive tape according to Claim 1 or 2, **characterized in that** the backing material has further films which may also be in the form of slitted film.

4. Adhesive tape according to Claims 1 to 3, **characterized in that** the supporting film is composed of BOPP, MOPP, PP, PE, PET, PA, PU, PVC or polyester and/or has a thickness of 5 to 50 µm.

5. Adhesive tape according to at least one of the preceding claims, **characterized in that** the slitted film is composed of stiff and high-tensile backings such as polyesters, PET, MOPP or U-PVC.

6. Adhesive tape according to at least one of the preceding claims, **characterized in that** the supporting backing has a thickness of up to 50 µm, preferably 5 to 25 µm, with very particular preference 5 to 15 µm.

7. Adhesive tape according to at least one of the preceding claims, **characterized in that** the application of adhesive to the backing material amounts to between 15 to 60 g/m², preferably between 20 to 30 g/m².

8. Adhesive tape according to at least one of the preceding claims, **characterized in that** the strength of the backing material is at least 250 N/mm², in particular 300 N/mm².

9. Adhesive tape according to at least one of the preceding claims, **characterized in that** the adhesive is a pressure-sensitive adhesive.

10. Use of an adhesive tape according to at least one of the preceding claims for bundling, packing or palletizing.

11. Use of an adhesive tape according to at least one of the preceding claims as reinforcing tape on paper, corrugated board or solid board, preferably at exposed positions such as grips, handles and cutouts.

## Revendications

1. Bande adhésive présentant un matériau support, sur lequel est appliquée, du moins d'un côté, une masse adhésive, le matériau support étant constitué par un stratifié constitué au moins par une feuille support et une feuille fendue, **caractérisée**
**en ce que** la feuille fendue présente au moins une fente s'étendant dans la direction longitudinale de la bande adhésive, les bandes qui en résultent dans la feuille fendue présentant une largeur de 1 à 4 mm et les bandes qui en résultent étant directement adjacentes,
et le stratifié en feuille support et feuille fendue étant assemblé par un adhésif.

2. Bande adhésive selon la revendication 1, **caractérisée en ce que** la feuille fendue se trouve entre la feuille support et la masse adhésive.

3. Bande adhésive selon la revendication 1 ou 2, **caractérisée en ce que** le matériau support présente d'autres feuilles, celles-ci pouvant également être réalisées sous forme de feuille fendue.

4. Bande adhésive selon au moins l'une quelconque des revendications 1 à 3, **caractérisée en ce que** la feuille support est en BOPP, en MOPP, en PP, en PE, en PET, en PA, en PU, en PVC ou en polyester et/ou présente une épaisseur de 5 à 50 µm.

5. Bande adhésive selon au moins l'une quelconque des revendications précédentes, **caractérisée en ce que** la feuille fendue est constituée par un support rigide et résistant à la traction, tel que le polyester, le PET, le MOPP, le H-PVC.

6. Bande adhésive selon au moins l'une quelconque des revendications précédentes, **caractérisée en ce que** le support d'appui présente une épaisseur allant jusqu'à 50 µm, de préférence de 5 à 25 µm, de manière tout particulièrement préférée de 5 à 15 µm.

7. Bande adhésive selon au moins l'une quelconque des revendications précédentes, **caractérisée en ce que** l'application de la masse adhésive sur le matériau support est comprise entre 15 et 60 g/m², de préférence entre 20 et 30 g/m².

8. Bande adhésive selon au moins l'une quelconque des revendications précédentes, **caractérisée en ce que** la résistance du matériau support est d'au moins 250 N/mm², en particulier 300 N/mm².

9. Bande adhésive selon au moins l'une quelconque des revendications précédentes, **caractérisée en ce que** la masse adhésive est une masse autoadhésive.

10. Utilisation d'une bande adhésive selon au moins l'une quelconque des revendications précédentes pour l'empaquetage, l'emballage, la palettisation.

11. Utilisation d'une bande adhésive selon au moins l'une quelconque des revendications précédentes, comme bande de renfort sur du papier, du carton ondulé ou du carton plein, de préférence en des endroits exposés, tels que les poignées, les anses et les sorties.
